# EUROPEAN PATENT APPLICATION

(11) **EP 2 322 588 A1**
(43) Date of publication of application: **18.05.2011**
(21) Application number: 08783768.8
(22) Date of filing: 28.07.2008
(51) Int. Cl.: C10G 1/00

(54) **PROCESS FOR DIRECT LIQUEFACTION OF CELLULOSE CONTAINING BIOMASS**

(71) Applicant: China Fuel (Huaibei) Bioenergy Technology Development Co., Ltd, Anhui 235000 (CN); Sun Pharmaceuticals, Inc., San Diego, CA 92128 (US)
(72) Inventor: ZHU, Zuolin, San Diego California 92128 (US); SUN, Meg M., San Diego California 92128 (US); YIE, Hongping, Huaibei Anhui 235000 (CN); SU, Chungao, Huaibei Anhui 235000 (CN)
(74) Representative: Biggi, Cristina
(86) International application number: PCT/CN2008/071775
(87) International publication number: WO 2010/012132

(57) **Abstract**

The invention provides a process for direct liquification of cellulosic biomass, which may be used to liquefy all of the organics in cellulosic biomass, including all high molecular polymeric components such as carbohydrates and lignins, into small molecular organics in a short time under mild conditions. In other words, there is provided a technology capable of converting cellulosic biomass into oil. The resultant renewable high-quality oil may be converted into liquid fuels such as gasoline etc., or used as starting materials in chemical engineering industry. The technology for direct liquification of cellulosic biomass as disclosed in the invention is the first one-step process in the world for direct liquification of cellulosic biomass without black tar formation and gasification.

## Description

### Technical Field

The invention relates to the field of refining cellulosic biomass, particularly to a process for direct liquification of cellulosic biomass.

### Background Art

Nowadays, human beings see the most critical turning point in history when the consumption of nonrenewable fossil energies such as coal, oil, natural gas, etc., grows rapidly. The reason lies in not only the possible crisis of energy shortage, but also the global warming caused by the huge amount of fossil-energy-derived carbon dioxide. It is widely accepted that global warming is the very origin of the global disastrous weather phenomena in recent years. In order to ensure the survival and sustainable development of human beings, new and renewable energy resources have to be developed and utilized.

On the other hand, since most starting materials in modern chemical engineering industry originate from oil, reduction of the emission of the green house gas, carbon dioxide, necessitates less use of oil as the liquid fuel. At the same time, modern chemical engineering industry requires maximum use of renewable starting materials in place of oil as the starting material.

Cellulosic biomass contains a large quantity of linear organics and a multiple of aromatic compounds and is thus a renewable energy resource material with rich sources. As evaluated by a UN expert panel, only cellulosic biomass, as a renewable energy resource, is capable of supporting the survival and development of human beings. A fatal drawback of cellulosic biomass is its density that is too low. Before it can be used as a renewable biological energy resource, a problem that has to be addressed is the production of high-energy-density products by refining cellulosic biomass.

One solution is liquification of cellulosic biomass. After liquification of cellulose, a plurality of small organic compounds may be obtained. These small organic compounds are good starting materials for both liquid fuels and modern chemical engineering industry.

PCT/CN2006/000120 discloses a production method for refining cellulosic biomass, according to which it may be expected that the cost of producing fuel ethanol from cellulosic biomass on a commercial scale will be comparable to that from starch. However, this method involves several steps, so that the process is still complex, and the production cost is still high.

Thus, there remains an urgent need in the art for an efficient process for direct liquification of cellulosic biomass with simple procedures. However, there is no report so far on direct liquification of cellulosic biomass.

### Summary of the Invention

The object of the invention is to provide a simple and efficient process for direct liquification of cellulosic biomass.

According to the first aspect of the invention, there is provided a process for direct liquification of cellulosic biomass, comprising:
(a) providing a mixture comprising cellulosic biomass, a catalyst and an optional polar solvent;
   wherein the catalyst is selected from the group consisting of:
   (i) a first catalyst which is an alkaline substance and is selected from the group consisting of alkali metal hydroxides, alkaline earth metal hydroxides, alkali metal oxides, alkaline earth metal oxides, alkali metal carbonates, or alkaline earth metal carbonates, or combinations thereof, and/or
   (ii) a second catalyst comprising transition metal oxides, transition metal sulfides, bimetallic salts of transition metals, anthraquinone and its derivatives, or demethylated lignin, or combinations thereof; and/or
   (iii) a combined catalyst of a first catalyst and a second catalyst;
   with the proviso that the mixture may comprise no polar solvent when cellulosic biomass contributes greater than 6% of the water content in the mixture;
(b) directly liquefying the mixture under liquification conditions to obtain liquification products.

In another preferred embodiment, step (a) comprises mixing the cellulosic biomass and the polar solvent first and then forming the mixture by adding the catalyst.

In another preferred embodiment, step (b) is carried out in a pressure reactor.

In another preferred embodiment, the cellulosic biomass includes but is not limited to fresh cellulosic biomass or dry cellulosic biomass.

In another preferred embodiment, the cellulosic biomass includes a variety of cellulosic biomass, which includes but is not limited to:
Hard wood, soft wood, bark, leaves, roots, cane, wild grass, reed, bamboo, hydrophyte;
Cellulose-containing residues in agriculture, forestry, vegetable and fruit processing industry, animal dejecta, and cellulose-containing scrap in Chinese traditional medicine processing industry;
Crop castoff, such as corn stalk, broomcorn stalk, wheat stalk, bean stalk, rape stalk, peanut seedlings, tuber seedlings, herbaceous fruit seedlings, and cotton stalk; or

Mixtures of the above-mentioned substances.

In another preferred embodiment, the solvent includes hydroxyl compounds, substances which can be converted into hydroxyl compounds under alkaline conditions, ion liquids and water or combinations thereof.

The hydroxyl compounds include all alcohol solvents and phenol solvents.

In another preferred embodiment, the alcohol solvents include but are not limited to carbon alcohols, mercaptons, silanols, with carbon alcohols preferred. Among all carbon alcohols, small molecular alcohols, such as methanol, ethanol, propanol, ethylene glycol, glycerin, butanol are preferred.

In another preferred embodiment, the phenol solvents include but are not limited to phenol, monomethyl phenol, dimethyl phenol, trimethyl phenol, methoxyl phenol, with phenol preferred.

In another preferred embodiment, the substances which can be converted into hydroxyl compounds under alkaline conditions include but are not limited to ketones and aldehydes, including but not limited to acetone, methyl ethyl ketone, benzaldehyde.

In another preferred embodiment, the ionic liquids include but are not limited to liquids composed of organic cations containing nitrogen, phosphorus and large inorganic anions, wherein typical cations include alkyl ammonium salts, alkyl phosphate salts, N-alkyl pyridine and N,N'-dialkylimidazole cations, typical anions include halogen ions, AlCl₄⁻, and multiple ions containing fluorine, phosphorus, sulfur, such as BF₄⁻, PF₆⁻, CF₃SO₃⁻.

In another preferred embodiment, the alkali metal hydroxides include but are not limited to lithium hydroxide, sodium hydroxide, potassium hydroxide or combinations thereof;

The alkaline earth metal hydroxides include but are not limited to beryllium hydroxide, magnesium hydroxide, calcium hydroxide, strontium hydroxide, barium hydroxide or combinations thereof;

The alkali metal oxides include but are not limited to lithium oxide, sodium oxide, potassium oxide and so on; and alkaline earth metal oxides are, for example, beryllium oxide, magnesium oxide, calcium oxide, strontium oxide, barium oxide or combinations thereof;

The alkali metal carbonates include but are not limited to lithium carbonate, sodium carbonate, potassium carbonate or combinations thereof;

The alkaline earth metal carbonates include but are not limited to beryllium carbonate, magnesium carbonate, calcium carbonate, strontium carbonate, barium carbonate or combinations thereof;

The transition metal oxides include but are not limited to oxides of iron (Fe), ruthenium (Ru), osmium (Os), copper (Cu), stannum (Sn), nickel (Ni), palladium (Pd), platinum (Pt), cobalt (Co), rhodium (Rh), iridium (Ir), chromium (Cr), molybdenum (Mo), tungsten (W) or combinations thereof;

The transition metal sulfides include but are not limited to sulfides of iron, copper, stannum, ruthenium, osmium, cobalt, nickel, palladium, platinum, rhodium, chromium, molybdenum, tungsten or combinations thereof;

The bimetallic salts of transition metals include but are not limited to copper chromite (Cu₂Cr₂O₅), iron chromite or a combination thereof.

In another preferred embodiment, the catalyst is a combined catalyst consisting of a first catalyst and a second catalyst.

In another preferred embodiment, in the mixture, the content of the first catalyst is 0.1%-100% of the dry weight of the cellulosic biomass, and or

The content of the second catalyst is 0.01%-100% of the dry weight of the cellulosic biomass.

In another preferred embodiment, the liquification conditions include:
(1) in step (b), the liquification reactions may take place in the presence of oxygen;
   Preferably, the liquification reactions take place in the presence of an inert gas, carbon monoxide or hydrogen;
(2) in step (b), hydrogen is used, and the initial pressure of hydrogen is 2-300 atmospheres;

In step (b), the liquification reaction temperature is 50-600°C, preferably 100-500°C, more preferably 150-400°C.

### Brief Description of the Drawings

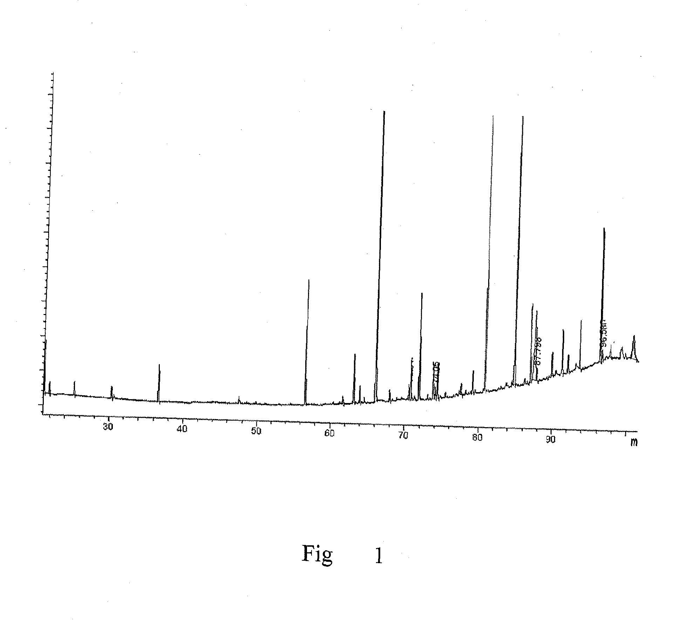

Fig. 1 shows the result of GC/MS analysis for the direct liquification products of cow dung, wherein the horizontal coordinate represents retention time in minute, and the vertical coordinate represents relative abundance.

### Detailed Description of the Invention

After extensive and intensive study, the inventors have found that in the presence of a particular catalyst, cellulosic biomass may be directly liquefied in a short time under mild conditions. Based on this finding, the invention has been fulfilled.

In particular, the invention provides a process for direct liquification of cellulosic biomass. The process can be used to convert most (or all) of the organics in cellulosic biomass into small molecular organic compounds in a short time under mild conditions, while avoiding serious loss of organic carbon caused by carbonization of the organics in cellulosic biomass (into inorganics) or gasification of the organics in cellulosic biomass (into small molecular gases, such as methane, ethane, propane, carbon monoxide, carbon dioxide, etc.).

The term cellulosic biomass material as used in the invention is defined as biomass containing cellulose, wherein biomass refers to the remaining matter rich in biomass energy after removal of edible part, such as various hard wood, soft wood, bark, leaves, roots, cane, wild grass, reed, bamboo, hydrophyte; cellulose-containing scrap in agriculture, forestry, vegetable and fruit processing industry, animal dejecta, and cellulose-containing scrap in Chinese traditional medicine processing industry; crop castoff, such as corn stalk, broomcorn stalk, wheat stalk, bean stalk, rape stalk, peanut seedlings, tuber seedlings, herbaceous fruit seedlings, and cotton stalk; etc.. The main constitutes of these cellulosic biomass are glycan cellulose and hemicellulose, as well as lignin of polyaromatic compounds.

The process for direct liquification of cellulosic biomass as disclosed in the invention is suitable for all kinds of biomass containing cellulose, including but not limited to fresh cellulosic biomass or dried cellulosic biomass (as described above).

In one embodiment of the invention, the polar solvent includes hydroxyl compounds, substances which can be converted into hydroxyl compounds under alkaline conditions, ion liquids and water. The hydroxyl compounds include all alcohol solvents and phenol solvents, such as carbon alcohols, mercaptons, silanols, with carbon alcohols preferred. Among all carbon alcohols, small molecular alcohols, such as methanol, ethanol, propanol, ethylene glycol, glycerin, butanol are preferred. Among the phenol compounds, for example, phenol, monomethyl phenol, dimethyl phenol, trimethyl phenol, methoxyl phenol, etc., phenol is preferred. The substances which can be converted into hydroxyl compounds under alkaline conditions include ketones and aldehydes, such as acetone, methyl ethyl ketone, benzaldehyde, etc.. The ionic liquids include all liquids composed of organic cations containing nitrogen, phosphorus and large inorganic anions, wherein cations are, for example, alkyl ammonium salts, alkyl phosphate salts, N-alkyl pyridine and N,N'-dialkylimidazole cations, anions are, for example, halogen ions, AlCl₄⁻, and multiple ions containing fluorine, phosphorus, sulfur, such as BF₄⁻, PF₆⁻, CF₃SO₃⁻. Any of these polar solvents may be used alone or in combination.

In one embodiment of the invention, cellulosic biomass may be used in crushed form without addition of any polar solvent if the cellulosic biomass contains more than 6% of water. If cellulosic biomass is dry substance without water, a polar solvent is typically used in an amount of no less than 10% (weight/volume) of the cellulosic biomass.

In one embodiment of the invention, the catalyst includes:
A first catalyst which is an alkaline substance and includes alkali metal hydroxides, such as lithium hydroxide, sodium hydroxide, potassium hydroxide, etc.; alkaline earth metal hydroxides, such as beryllium hydroxide, magnesium hydroxide, calcium hydroxide, strontium hydroxide, barium hydroxide, etc.; alkali metal oxides, such as lithium oxide, sodium oxide, potassium oxide, etc.; alkaline earth metal oxides, such as beryllium oxide, magnesium oxide, calcium oxide, strontium oxide, calcium oxide, barium oxide, etc.; alkali metal carbonates, such as lithium carbonate, sodium carbonate, potassium carbonate, etc.; alkaline earth metal carbonates, such as beryllium carbonate, magnesium carbonate, calcium carbonate, strontium carbonate, barium carbonate, etc.. Any of these catalysts may be used alone or in combination.
A second catalyst, including transition metal oxides, for example, oxides of iron (Fe), ruthenium (Ru), osmium (Os), copper (Cu), stannum (Sn), nickle (Ni), palladium (Pd), platinum (Pt), cobalt (Co), rhodium (Rh), iridium (Ir), chromium (Cr), molybdenum (Mo), tungsten (W), etc.; transition metal sulfides, for example, sulfides of iron, copper, stannum, ruthenium, osmium, cobalt, nickel, palladium, platinum, rhodium, chromium, molybdenum, tungsten, etc.; bimetallic salts of the foregoing metals, for example, copper chromite (Cu₂Cr₂O₅), iron chromite, etc.; some organic compounds, for example, anthraquinone and its derivatives, demethylated lignin, etc.. Any of the catalysts as described above may be used alone or in combination.

Each of the first catalyst and the second catalyst may be used alone. Preferably, the first catalyst and the second catalyst may be used together. The adducts formed by forming various non-covalent bonds between the substance of the first catalyst and that of the second catalyst, as well as between those of the second catalyst, may function the same.

Generally, the amount of the first catalyst used is 0.1%-100% of the (dry) weight of the cellulosic biomass. Otherwise, although the catalytic reactions may also occur, they will be slow if the amount of the first catalyst is lower than the above range, or the cost will be too high if that amount is higher than the above range. Neither of the cases is preferred.

When the first catalyst and the second catalyst are used together, the mixing ratio of them is not particularly limited. Generally, the weight ratio of the first catalyst to the second catalyst may be, for example, 0.01-99.9 to 99.9-0.01.

Liquification reactions may be carried out in the presence of oxygen. However, the reactions are most preferably carried out in the absence of oxygen or in the presence of an inert gas, carbon monoxide or hydrogen, because the products of direct liquification of cellulosic biomass comprise a large quantity of single-ring phenols as well as intermediate products of hydrolyzation of cellulose and semicellulose, and some of the second catalysts are ready to be oxidized, leading to complex products, gasification of cellulosic biomass and deactivation of catalyst.

Since hydrogen is expensive than an inert gas, when hydrogen is used in the reactions, oxygen in the reactions is generally removed by replacement with an inert gas, and then hydrogen is filled to carry out the reactions. The initial pressure of hydrogen is generally in the range of 2-300 atmospheres. Otherwise, although the reactions may also occur, they will be slow if the amount of hydrogen used is lower than the above range, or the cost will be too high while a portion of the single-ring phenol products will be reduced if the amount of hydrogen used is higher than the above range. Neither of the cases is preferred.

The reaction temperature used is generally in the range of 50-600°C . Otherwise, although the reactions may also occur successfully, they will be slow if the temperature is lower than the above range, or the cost will be too high while a portion of the cellulosic biomass will be carbonized or gasified, leading to a reduced yield, if the temperature is higher than the above range. Neither of the cases is preferred. Preferably, the temperature is 100-500°C. More preferably, the temperature is 150-400°C.

In the one-step process for direct liquification of cellulosic biomass as disclosed by the invention, either unpretreated or pretreated cellulosic biomass may be used. The use of unpretreated cellulosic biomass may reduce the cost for refining cellulosic biomass significantly. However, scrap produced in many existing production processes may be regarded as pretreated material, for example, bagasse produced in sugar milling, etc.. The direct liquification reactions of pretreated cellulosic biomass may still proceed very well.

None of the existing processes for pretreating cellulosic biomass has any impact on the technology and production process for one-step direct liquification of biomass according to the invention.

The process for direct liquification of cellulosic biomass as disclosed in the invention may be carried out in a batch reactor system, a continuous flow reactor system or a continuous flow-through reactor system.

The main advantages of the invention include:
(a) Most (or all) of the components of the cellulosic biomass may be liquefied in a single step with substantially no carbonization or gasification according to the one-step process for direct liquification of cellulosic biomass.
(b) The process of the invention shortens the time for generation of oil from tens of millions of years to a dozen minutes or up to several hours, and the resultant liquefied products are of very high quantity, with substantially no heavy metals and extremely low contents of sulfur and nitrogen (mainly derived from proteins in cellulosic biomass), and may be converted into liquid fuels such as gasoline (and thus used as artificial renewable oil products) or used as starting materials in chemical engineering industry.

### Examples

The following embodiments are provided to make better illustration of the invention and not intended to limit the content as disclosed in the invention thereto. Unless otherwise indicated specifically, all percentages are based on weight.

The reaction products were analyzed using chromatography, such as chromatography-mass spectrum.

### Example 1: Direct Liquification of Cow Dung

Into a 100mL stainless autoclave were added 5g naturally dried solid cow dung particles (water content: 6.0%), 0.4g iron sulfide and 50g phenol. The mixture was heated to 80°C, and deoxygenated twice with nitrogen under agitation. The reaction system was filled with hydrogen to 100 atmospheres (10 MPa), sealed and then heated to 300°C. After held for 5 hours, the system was cooled to room temperature. The pressure was only lowered by about 5 atmospheres. After the gas was expelled, the liquid products were poured out, and the autoclave was washed twice with a little toluene. No indication of carbonization reaction was found in the autoclave.

Analysis of the resultant liquid products showed that the main organic components were single-ring aromatic compounds. Further analysis indicated, as shown by the analysis result in Fig. 1, that among the single-ring compounds which had a weight content of over 3% were methyl phenol (m/e=108), dimethyl phenol (m/e=122), trimethyl phenol (m/e=136), ethyl phenol (m/e=122), methoxyl phenol (m/e=124), isopropyl phenol (m/e=136), methoxyl methyl phenol (m/e=138), vanillin (m/e=152), with some organics at relatively lower contents. The yield of small molecular organic compounds after liquification was 92.7%.

### Example 2: Liquification of Pretreated Wheat Straw

### Step 1: Pretreatment

Into an appropriate vessel were added 30.0g crushed and naturally dried wheat straw (water content: 5.8%) and 100mL purified water. The mixture was heated to near 100°C under agitation and held for about 10 minutes. Then the resultant dark brown yellow liquid was filtered off (dewaxing), and the remaining solid was vacuum dried and then loaded into a corrosion-resistant reactor into which 150mL water containing 1% sulfuric acid was then added. The temperature was raised to 120°C. After agitation for 60 minutes at this temperature, the system was cooled to room temperature. The solution of mixed sugar of hemicellulose was filtered off, and the solid products were washed with deionized water to neutral and vacuum dried for later use.

### Step 2: Liquification

Into a 200mL stainless autoclave were added 10g of the solid products containing cellulose, lignin and a little ash (inherently contained in stalk) as obtained in step 1, 8g sodium hydroxide, 10mg anthraquinone and 90mL water. After the mixture was deoxygenated twice with nitrogen under agitation, the reaction system was filled with hydrogen to 40 atmospheres (4MPa), sealed and heated to 200°C. After held for 2 hours, the system was cooled to room temperature. The pressure was only lowered by 2-3 atmospheres. After the gas was expelled, the liquid products were filtered, and the autoclave was washed twice with a little 1% aqueous solution of sodium hydroxide. No indication of carbonization reaction was found in the autoclave. After the washing liquid was filtered, the filler residue was washed twice with a little 1% aqueous solution of sodium hydroxide and then vacuum dried. Analysis indicated that neither organic nor elemental carbon was present in the filter residue.

Analysis of the resultant liquid products showed that the main organic components were single-ring aromatic compounds, multihydroxyl compounds containing 6 carbons and a small amount of water-soluble polysaccharides. Further analysis indicated that among the single-ring compounds which had a weight content of over 3% were phenol (m/e=94), methyl phenol (m/e=108), dimethyl phenol (m/e=122), trimethyl phenol (m/e=136), ethyl phenol (m/e=122), methoxyl phenol (m/e=124), isopropyl phenol (m/e=136), methoxyl methyl phenol (m/e=138), vanillin (m/e=152), with some organics at relatively lower contents. The multihydroxyl compounds containing 6 carbons were mainly a variety of isomeric organics having molecular weights of m/e=196, m/e=182, m/e=166. With the aromatic compounds and the multihydroxyl compounds considered together, the yield of small molecular organic compounds after liquification was 96.5%.

The results show that pretreated cellulosic biomass is quite ready to be liquefied into small molecular organics without carbonization or gasification under the conditions as disclosed in the invention.

### Example 3: Direct Liquification of Wheat Straw (Unpretreated Wheat Straw)

Into a 200mL stainless autoclave were added 10g naturally dried solid wheat straw particles which had been crushed to about 2mm (water content: 5.8%), 8g sodium hydroxide, 10mg anthraquinone and 90mL water. After the mixture was deoxygenated twice with nitrogen under agitation, the reaction system was filled with hydrogen to 40 atmospheres (4MPa), sealed and heated to 200°C. After held for 2 hours, the system was cooled to room temperature. The pressure was only lowered by 2-3 atmospheres. After the gas was expelled, the liquid products were filtered, and the autoclave was washed twice with a little 1% aqueous solution of sodium hydroxide. No indication of carbonization reaction was found in the autoclave. After the washing liquid was filtered, the filler residue was washed twice with a little 1% aqueous solution of sodium hydroxide and then vacuum dried. Analysis indicated that neither organic nor elemental carbon was present in the filter residue.

Analysis of the resultant liquid products showed that the main organic components were single-ring aromatic compounds, multihydroxyl compounds containing 5 and 6 carbons, and a small amount of water-soluble polysaccharides. Further analysis indicated that among the single-ring compounds which had a weight content of over 3% were phenol (m/e=94), methyl phenol (m/e=108), dimethyl phenol (m/e=122), trimethyl phenol (m/e=136), ethyl phenol (m/e=122), methoxyl phenol (m/e=124), isopropyl phenol (m/e=136), methoxyl methyl phenol (m/e=138), vanillin (m/e=152), with some organics at relatively lower contents. The multihydroxyl compounds containing 5 and 6 carbons were mainly a variety of isomeric organics having molecular weights of m/e=196, m/e=182, m/e=166, m/e=152, m/e=136. With the aromatic compounds and the multihydroxyl compounds considered together, the yield of small molecular organic compounds after liquification was 94.8%.

The results show that the liquification reactions of unpretreated cellulosic biomass are not impacted, and the distribution of the products is quite similar to that for pretreated stalk, except for several additional products derived from five-carbon saccharides.

### Example 4: Direct Liquification of Rape Stalk

Into a 200mL stainless autoclave were added 10g naturally dried solid rape stalk particles which had been crushed to about 2mm (water content: 6.3%), 1g calcium hydroxide, 1g copper sulfide and 90mL methanol. After the mixture was deoxygenated twice with nitrogen under agitation, the reaction system was filled with hydrogen to 80 atmospheres (8MPa), sealed and heated to 260°C. After held for 2 hours, the system was cooled to room temperature. The pressure was only lowered by about 4 atmospheres (no rise of pressure was observed). After the gas was expelled, the liquid products were filtered, and the autoclave was washed twice with a little methanol. No indication of carbonization reaction was found in the autoclave. After the washing liquid was filtered, the filler residue was washed twice with a little methanol and then vacuum dried. Analysis indicated that neither organic nor elemental carbon was present in the filter residue.

Analysis of the resultant liquid products showed that the main organic components were single-ring aromatic compounds, multihydroxyl compounds containing 5 and 6 carbons, and a small amount of water-soluble polysaccharides. Further analysis indicated that among the single-ring compounds which had a weight content of over 3% were phenol (m/e=94), methyl phenol (m/e=108), dimethyl phenol (m/e=122), trimethyl phenol (m/e=136), ethyl phenol (m/e=122), methoxyl phenol (m/e=124), isopropyl phenol (m/e=136), methoxyl methyl phenol (m/e=138), vanillin (m/e=152), with some organics at relatively lower contents. The multihydroxyl compounds containing 5 and 6 carbons were mainly a variety of isomeric organics having molecular weights of m/e=196, m/e=182, m/e=166, m/e=152, m/e=136. With the aromatic compounds and the multihydroxyl compounds considered together, the yield of small molecular organic compounds after liquification was 89.3%.

The results show that alcohol is a good solvent, and likely, neither carbonization nor gasification is found.

### Example 5: Direct Liquification of Reed

Into a 100mL stainless autoclave were added 5g naturally dried solid reed particles which had been crushed to about 2mm (water content: 6.0%), 5g magnesium hydroxide and 50mL ionic liquid, i.e. 1-butyl-3-methylimidazolium tetrafluoroborate. After the mixture was deoxygenated twice with nitrogen under agitation, the reaction system was filled with hydrogen to 90 atmospheres (9MPa), sealed and heated to 260°C. After held for 10 hours, the system was cooled to room temperature. The pressure was only lowered by about 5 atmospheres. After the gas was expelled, the liquid products were poured out, and the autoclave was washed twice with a little water. No indication of carbonization reaction was found in the autoclave.

Analysis of the resultant liquid products showed that the main organic components were single-ring aromatic compounds, multihydroxyl compounds containing 5 and 6 carbons, and a small amount of water-soluble polysaccharides. Further analysis indicated that among the single-ring compounds which had a weight content of over 3% were phenol (m/e=94), methyl phenol (m/e=108), dimethyl phenol (m/e=122), trimethyl phenol (m/e=136), ethyl phenol (m/e=122), methoxyl phenol (m/e=124), isopropyl phenol (m/e=136), methoxyl methyl phenol (m/e=138), vanillin (m/e=152), with some organics at relatively lower contents. The multihydroxyl compounds containing 5 and 6 carbons were mainly a variety of isomeric organics having molecular weights of m/e=196, m/e=182, m/e=166, m/e=152, m/e=136. With the aromatic compounds and the multihydroxyl compounds considered together, the yield of small molecular organic compounds after liquification was 86.4%.

### Example 6: Direct Liquification of Reed

Into a 200mL stainless autoclave were added 5g naturally dried solid reed particles which had been crushed to about 2mm (water content: 6.0%), 1g copper chromite and 90mL water. After the mixture was deoxygenated twice with nitrogen under agitation, the reaction system was filled with hydrogen to 90 atmospheres (9MPa), sealed and heated to 260°C. After held for 6 hours, the system was cooled to room temperature. The pressure was only lowered by about 5 atmospheres. After the gas was expelled, the liquid products were filtered, and the autoclave was washed twice with a little water. No indication of carbonization reaction was found in the autoclave. After the washing liquid was filtered, the filler residue was washed twice with a little water and then vacuum dried. Analysis indicated that neither organic nor elemental carbon was present in the filter residue.

Analysis of the resultant liquid products showed that the main organic components were single-ring aromatic compounds, multihydroxyl compounds containing 5 and 6 carbons, and a small amount of water-soluble polysaccharides. Further analysis indicated that among the single-ring compounds which had a weight content of over 3% were phenol (m/e=94), methyl phenol (m/e=108), dimethyl phenol (m/e=122), trimethyl phenol (m/e=136), ethyl phenol (m/e=122), methoxyl phenol (m/e=124), isopropyl phenol (m/e=136), methoxyl methyl phenol (m/e=138), vanillin (m/e=152), with some organics at relatively lower contents. The multihydroxyl compounds containing 5 and 6 carbons were mainly a variety of isomeric organics having molecular weights of m/e=196, m/e=182, m/e=166, m/e=152, m/e=136. With the aromatic compounds and the multihydroxyl compounds considered together, the yield of small molecular organic compounds after liquification was 90.1 %.

### Example 7: Direct Liquification of Fresh Reed

Fresh reed was crushed by an disintegrator into a slurry containing 28% water (weight content), from which 30g was taken and added into a 60mL stainless autoclave together with 3g sodium hydroxide and 300mg ruthenium oxide. After the mixture was deoxygenated twice with nitrogen under agitation, the reaction system was filled with hydrogen to 100 atmospheres (10MPa), sealed and heated to 230°C. After held for 2 hours, the system was cooled to room temperature. The pressure was only lowered by about 5 atmospheres. After the gas was expelled, the liquid products were filtered, and the autoclave was washed twice with a little 1% aqueous solution of sodium hydroxide. No indication of carbonization reaction was found in the autoclave. After the washing liquid was filtered, the filler residue was washed twice with a little 1% aqueous solution of sodium hydroxide and then vacuum dried. Analysis indicated that neither organic nor elemental carbon was present in the filter residue.

Analysis of the resultant liquid products showed that the main organic components were single-ring aromatic compounds, multihydroxyl compounds containing 5 and 6 carbons, and a small amount of water-soluble polysaccharides. Further analysis indicated that among the single-ring compounds which had a weight content of over 3% were phenol (m/e=94), methyl phenol (m/e=108), dimethyl phenol (m/e=122), trimethyl phenol (m/e=136), ethyl phenol (m/e=122), methoxyl phenol (m/e=124), isopropyl phenol (m/e=136), methoxyl methyl phenol (m/e=138), vanillin (m/e=152), with some organics at relatively lower contents. The multihydroxyl compounds containing 5 and 6 carbons were mainly a variety of isomeric organics having molecular weights of m/e=196, m/e=182, m/e=166, m/e=152, m/e=136. With the aromatic compounds and the multihydroxyl compounds considered together, the yield of small molecular organic compounds after liquification was 96.1 %.

The results show that, just like the case of dry reed, the liquification reactions of fresh reed are not impacted, and the distribution of the products is quite similar to that for dry reed.

### Example 8: Direct Liquification of Bamboo

Into a 200mL stainless autoclave were added 10g naturally dried bamboo particles which had been crushed to about 2mm (water content: 5.3%), 2g copper chromite and 90mL 6% aqueous solution of sodium hydroxide after they were mixed homogenously. After the mixture was deoxygenated twice with nitrogen under agitation, the reaction system was filled with hydrogen to 100 atmospheres (10MPa), sealed and heated to 220°C. After held for 1.5 hours, the system was cooled to room temperature. The pressure was only lowered by about 5 atmospheres. After the gas was expelled, the liquid products were filtered, and the autoclave was washed twice with a little 1% aqueous solution of sodium hydroxide. No indication of carbonization reaction was found in the autoclave. After the washing liquid was filtered, the filler residue was washed twice with a little 1% aqueous solution of sodium hydroxide and then vacuum dried. Analysis indicated that neither organic nor elemental carbon was present in the filter residue.

Analysis of the resultant liquid products showed that the main organic components were single-ring aromatic compounds, multihydroxyl compounds containing 5 and 6 carbons, and a small amount of water-soluble polysaccharides. Further analysis indicated that among the single-ring compounds which had a weight content of over 3% were phenol (m/e=94), methyl phenol (m/e=108), dimethyl phenol (m/e=122), trimethyl phenol (m/e=136), ethyl phenol (m/e=122), methoxyl phenol (m/e=124), isopropyl phenol (m/e=136), methoxyl methyl phenol (m/e=138), vanillin (m/e=152), with some organics at relatively lower contents. The multihydroxyl compounds containing 5 and 6 carbons were mainly a variety of isomeric organics having molecular weights of m/e=196, m/e=182, m/e=166, m/e=152, m/e=136. With the aromatic compounds and the multihydroxyl compounds considered together, the yield of small molecular organic compounds after liquification was 86.3%.

### Example 9: Direct Liquification of Cow Dung

Into a 30mL stainless autoclave were added 10g naturally dried solid cow dung particles (water content: 6.0%) and 0.2g potassium hydroxide. After the mixture was deoxygenated twice with nitrogen, the reaction system was filled with nitrogen to 2 atmospheres (1MPa), sealed and heated to 580°C. After held for 5 minutes, the system was cooled to room temperature. After the gas was expelled, the liquid products were poured out, and the autoclave was washed twice with a little water. No indication of carbonization reaction was found in the autoclave.

Analysis of the resultant liquid products showed that the main organic components were single-ring aromatic compounds, and those which had a weight content of over 3% were phenol (m/e=94), methyl phenol (m/e=108), dimethyl phenol (m/e=122), trimethyl phenol (m/e=136), ethyl phenol (m/e=122), methoxyl phenol (m/e=124), isopropyl phenol (m/e=136), methoxyl methyl phenol (m/e=138), vanillin (m/e=152), with some organics at relatively lower contents. The yield of small molecular organic compounds after liquification was 71.4%.

### Examples 10-11: Direct Liquification of Bean Stalk (Dry) and Corn Stalk (Dry)

The process as described in Example 9 was carried out, except that the cow dung in Example 9 was replaced with bean stalk (Example 10) or corn stalk (Example 11). The results were shown in the following table.

The starting materials of cellulosic biomass, catalysts selected, liquification conditions and yields for Examples 1-11 were reported in the following table.

**Table 1**

| **Exam ple** | **Starting Material** | **First Catalyst** | **Second Catalyst** | **Gas** | **Polar Solvent** | **Pressure (atm)** | **Temperature (°C)** | **Time (hr)** | **Product Yield (%)** |
|---|---|---|---|---|---|---|---|---|---|
| 1 | Cow dung (dry) | | Fe₂S₃ | H₂ | Phenol | 100 | 300 | 5 | 92.7 |
| 2 | Wheat stalk (dry, pretreated) | NaOH | Anthraquinone | H₂ | H₂O | 40 | 200 | 2 | 96.5 |
| 3 | Wheat stalk (dry, unpretreated) | NaOH | CuS | H₂ | H₂O | 40 | 200 | 2 | 94.8 |
| 4 | Rape stalk (dry) | Cu(OH)₂ | | H₂ | CH₃OH | 80 | 260 | 2 | 89.3 |
| 5 | Reed (dry) | Mg(OH)₂ | | H₂ | Ironic liquid | 90 | 260 | 10 | 86.4 |
| 6 | Reed (dry) | | Cu₂Cr₂O₅ | H₂ | H₂O | 90 | 260 | 6 | 90.1 |
| 7 | Reed (fresh) | NaOH | RuO | H₂ | None | 100 | 230 | 2 | 96.1 |
| 8 | Bamboo (dry) | NaOH | Cu₂Cr₂O₅ | H₂ | H₂O | 100 | 220 | 1.5 | 86.3 |
| 9 | Cow dung (dry) | KOH | | N₂ | None | 2 | 580 | Heated to 580 °C, held for 5minutes | 71.4 |
| 10 | Bean stalk (dry) | KOH | FeS | H₂ | Ethylene glycol | 80 | 260 | 3 | 84.8 |
| 11 | Corn stalk (dry) | NaOH | Anthraquinone | CO | H₂O | 60 | 160 | 1.5 | 88.8 |

All of the documents mentioned in the invention are incorporated herein by reference, as if each of them were cited as reference independently. In addition, it is to be understood that, after reading the foregoing teachings of the invention, various changes or modifications will be apparent to those skilled in the art. These equivalents are considered to fall in the scope of the application defined by the appended claims.

## Claims

1. A process for direct liquification of cellulosic biomass, comprising:
(a) providing a mixture comprising cellulosic biomass, a catalyst and an optional polar solvent;
wherein the catalyst is selected from the group consisting of:
(i) a first catalyst which is an alkaline substance and includes alkali metal hydroxides, alkaline earth metal hydroxides, alkali metal oxides, alkaline earth metal oxides, alkali metal carbonates, or alkaline earth metal carbonates; and/or
(ii) a second catalyst including transition metal oxides, transition metal sulfides, bimetallic salts of transition metals, anthraquinone and its derivatives, or demethylated lignin; and/or
(iii) a combined catalyst of a first catalyst and a second catalyst;
with the proviso that the mixture may comprise no polar solvent when cellulosic biomass contributes greater than 6% (w/w) of the water content in the mixture;
(b) directly liquefying the mixture under liquification conditions to obtain liquification products.

2. The process of Claim 1, wherein step (a) comprises mixing the cellulosic biomass and the polar solvent first and then forming the mixture by adding the catalyst.

3. The process of Claim 1, wherein step (b) is carried out in a pressure reactor.

4. The process of Claim 1, wherein the cellulosic biomass includes but is not limited to fresh cellulosic biomass or dry cellulosic biomass.

5. The process of Claim 1, wherein:
The solvent includes hydroxyl compounds, substances which can be converted into hydroxyl compounds under alkaline conditions, ion liquids and water or combinations thereof;
The hydroxyl compounds include all alcohol solvents and phenol solvents;
The substances which can be converted into hydroxyl compounds under alkaline conditions include but are not limited to acetone, methyl ethyl ketone, benzaldehyde.

6. The process of Claim 1, wherein:
The alkali metal hydroxides include but are not limited to lithium hydroxide, sodium hydroxide, potassium hydroxide or combinations thereof;
The alkaline earth metal hydroxides include but are not limited to beryllium hydroxide, magnesium hydroxide, calcium hydroxide, strontium hydroxide, barium hydroxide or combinations thereof;
The alkali metal oxides include but are not limited to lithium oxide, sodium oxide, potassium oxide and so on; and alkaline earth metal oxides are, for example, beryllium oxide, magnesium oxide, calcium oxide, strontium oxide, barium oxide or combinations thereof;
The alkali metal carbonates include but are not limited to lithium carbonate, sodium carbonate, potassium carbonate or combinations thereof;
The alkaline earth metal carbonates include but are not limited to beryllium carbonate, magnesium carbonate, calcium carbonate, strontium carbonate, barium carbonate or combinations thereof;
The transition metal oxides include but are not limited to oxides of iron (Fe), ruthenium (Ru), osmium (Os), copper (Cu), stannum (Sn), nickel (Ni), palladium (Pd), platinum (Pt), cobalt (Co), rhodium (Rh), iridium (Ir), chromium (Cr), molybdenum (Mo), tungsten (W) or combinations thereof;
The transition metal sulfides include but are not limited to sulfides of iron, copper, stannum, ruthenium, osmium, cobalt, nickel, palladium, platinum, rhodium, chromium, molybdenum, tungsten or combinations thereof;
The bimetallic salts of transition metals include but are not limited to copper chromite (Cu₂Cr₂O₅), iron chromite or a combination thereof.

7. The process of Claim 1, wherein the catalyst is a combined catalyst of a first catalyst and a second catalyst.

8. The process of Claim 1, wherein:
In the mixture, the content of the first catalyst is 0.1%-100% of the dry weight of the cellulosic biomass, and/or
The content of the second catalyst is 0.01%-100% of the dry weight of the cellulosic biomass.

9. The process of Claim 1, wherein the liquification conditions include:
(1) in step (b), the liquification reactions may take place in the presence of oxygen;
Preferably, the liquification reactions take place in the presence of an inert gas, carbon monoxide or hydrogen;
(2) in step (b), hydrogen is used, and the initial pressure of hydrogen is 2-300 atmospheres;

10. The process of Claim 1, wherein in step (b), the liquification reaction temperature is 50-600°C.
